# FASCICULE DE BREVET EUROPEEN

(11) **EP 2 232 328 B1**
(45) Date de publication et mention de la délivrance du brevet: **24.04.2019**
(21) Numéro de dépôt: 08872247.5
(22) Date de dépôt: 08.12.2008
(51) Int. Cl.: G02F 1/15, G02C 7/10

(54) **LENTILLE OPTIQUE ELECTROCHROME.**
ELEKTROCHROME OPTISCHE LINSE
ELECTROCHROMIC OPTICAL LENS

(30) Priorité: 12.12.2007 FR 0708659
(43) Date de publication de la demande: 29.09.2010
(73) Titulaire: Hydro-Québec, Montréal QC H2Z 1A4 (CA); Essilor International, 94220 Charenton-le-Pont (FR)
(72) Inventeur: ZAGHIB, Karim, Longueuil Québec J4M 2M7 (CA); FEUILLADE, Mathieu, F-94106 Saint Maur (FR); LABRECQUE, Jean-François, Montréal Québec H2H 1Z6 (CA); GUERFI, Abdelbast, Brossard Québec J4X 1W2 (CA)
(74) Mandataire: Lavoix
(86) Numéro de dépôt international: PCT/FR2008/001704
(87) Numéro de publication internationale: WO 2009/098415

(56) Documents cités:
- EP-A- 0 850 920
- WO-A-97/26661
- WO-A1-2006/039795
- JP-A- 2003 043 526
- US-A- 5 657 150
- US-A1- 2002 110 739
- US-A1- 2004 097 757
- US-A1- 2006 188 788

## Description

La présente invention concerne un procédé pour l'élaboration de lentilles optiques électrochromes, ainsi que les lentilles obtenues.

On connaît des dispositifs électrochromes élaborés par dépôt d'une composition contenant un polymère réticulable sur un support approprié (l'une des électrodes par exemple), suivi d'une réticulation in situ est connu. EP-0 850 920 décrit l'élaboration d'un dispositif électrochrome par un procédé consistant à appliquer une composition polymérisable sur une plaque de verre revêtue d'une couche de WO₃ et d'une sous-couche conductrice d'oxyde d'étain, à photopolymériser par irradiation UV pour obtenir une membrane optiquement transparente dans le visible et adhérant au support, puis à assembler cette membrane avec une contre électrode constituée par une plaque de verre portant une couche d'oxyde d'iridium hydrogéné HₓIrO₂ et une sous couche d'oxyde d'étain. Dans ce procédé, la composition polymérisable est constituée par le sel de lithium de la trifluorométhane-sulfonyl(1-acryloyl-2,2,2-trifluoroéthanesulfonyl)imide, du diméthacrylate de poly(éthylène glycol), des particules de silice et de la xanthone. Cependant, la xanthone a des propriétés de colorant, et sa présence dans électrolyte diminue la transparence. En outre, la silice se dissout très mal dans un polymère sans solvant, elle augmente la porosité du matériau et contribue également à la diminution de la transparence.

WO97/26661 décrit un dispositif électrochrome comprenant un ensemble qui est formé par deux couches électrochromes séparées par un film de matériau à conduction ionique et qui est placé entre deux lentilles bombées. Chaque couche électrochrome est portée par un substrat revêtu d'un oxyde conducteur du type ITO. Le matériau à conduction ionique forme un électrolyte polymère conducteur ionique et il est constitué par un polymère conducteur protonique, par exemple un homopolymère d'acide 2-acrylamido-2-méthylpropanesulfonique. Le film de polymère est élaboré en déposant sur l'une des électrodes, un mélange réactionnel liquide contenant le précurseur du polymère en solution dans un solvant liquide, par exemple un mélange d'eau et de NMP. La présence du solvant liquide dans la composition destinée à former l'électrolyte solide nécessite l'élimination du solvant liquide, ce qui a pour résultat que le film d'électrolyte polymère qui en résulte est poreux. Or la porosité d'une couche d'un dispositif électrochrome nuit à la qualité optique du dispositif électrochrome.

Le but de l'invention est de fournir un procédé d'élaboration d'un dispositif électrochrome à électrolyte polymère non poreux, utilisable comme lentille électrochrome pour des lunettes, qui ne présente pas les inconvénients de la technique antérieure.

Le procédé selon la présente invention est destiné à l'élaboration d'une lentille électrochrome comprenant une électrode et une contre-électrode séparées par un électrolyte solide polymère, l'électrode étant constituée par un substrat transparent portant un film conducteur électronique revêtu par un film d'une matière active de cathode ayant des propriétés électrochromes, la contre-électrode étant constituée par un substrat transparent portant un film conducteur électronique revêtu par un film d'une matière active d'anode ayant des propriétés électrochromes, l'électrolyte étant constitué par un matériau à conduction ionique comprenant un sel en solution dans un polymère solide solvatant.

Le procédé selon l'invention est défini dans la revendication 1. Par faible viscosité, on entend soit une composition liquide, soit une composition dont la viscosité dynamique µ est entre 100 et 10⁶ Pa.s.

Lorsque la composition destinée à former l'électrolyte comprend un précurseur du polymère et est intercalée sous forme liquide, elle est appliquée sur la face électrochrome d'au moins l'un des substrats transparents, puis le précurseur est soumis à une polymérisation ou une réticulation. Le fait d'appliquer la composition destinée à former la couche d'électrolyte sous forme liquide a pour résultat que ladite composition pénètre dans la porosité de l'électrode et de la contre-électrode, ce qui crée une très bonne interface et assure un pont électrochimique. Le dispositif a ainsi une impédance plus faible. En outre, l'utilisation d'une composition exempte de solvant supprime la nécessité d'éliminer ledit solvant et empêche ainsi la formation d'une porosité dans le film d'électrolyte, sachant qu'une porosité du film d'électrolyte nuit aux performances du dispositif.

Lorsque la composition destinée à former l'électrolyte comprend un polymère et a une viscosité entre 100 et 10⁶ Pa.s, le procédé comprend une étape supplémentaire consistant à appliquer sur un film accessoire une composition liquide contenant un précurseur de polymère et un sel, à soumettre à une réticulation ou une polymérisation, puis à déposer le film obtenu par réticulation ou polymérisation sur la face portant le matériau électrochrome de l'un des substrats, en appliquant une pression à chaud pour amener à le film obtenu par polymérisation ou réticulation à une viscosité entre 100 et 10⁶ Pa.s. Ensuite, on retire le film accessoire et on applique la face électrochrome de l'autre substrat sur la face du film polymérisé ou réticulé libérée par le retrait du film accessoire.

Le film accessoire est avantageusement constitué par un polypropylène, un polyéthylène, un polyéthylène téréphtalate ou un poly tétrafluoroéthylène.

Dans un premier mode de réalisation, la composition liquide contenant le précurseur du polymère est appliquée sur la face portant le matériau électrochrome de l'un des substrats transparents, puis soumise à une polymérisation ou une réticulation, et ensuite la face électrochrome de l'autre substrat est appliquée sur la membrane polymère obtenue après réticulation. Dans un mode de mise en oeuvre particulier de ce premier mode de réalisation,
- on dépose, sur l'une des surfaces d'un 1^{er} substrat transparent, successivement un film de conducteur électronique et un film d'une matière active de cathode ayant des propriétés électrochromes, pour former l'électrode,
- on dépose, sur l'une des surfaces d'un 2^{ème} substrat transparent, successivement un film de conducteur électronique et un film d'une matière active d'anode ayant des propriétés électrochromes, pour former la contre-électrode ;
- on applique, sur le film de matière active électrochrome de l'un des substrats, une composition liquide destinée à former l'électrolyte polymère et on soumet ladite composition à une réticulation ou une polymérisation ;
- on applique la face électrochrome de l'autre substrat sur la membrane formée par réticulation ou polymérisation composition.

Dans un second mode de réalisation, la composition liquide contenant le précurseur du polymère est injectée dans un espace délimité par la face libre du film de matériau électrochrome de chacun des substrats assemblés au préalable, puis soumise à une polymérisation ou une réticulation. Dans un mode de mise en oeuvre particulier de ce second mode de réalisation :
- on dépose, sur l'une des surfaces d'un 1^{er} substrat transparent, successivement un film de conducteur électronique et un film d'une matière active de cathode ayant des propriétés électrochromes, pour former l'électrode,
- on dépose, sur l'une des surfaces d'un 2^{ème} substrat transparent, successivement un film de conducteur électronique et un film d'une matière active d'anode ayant des propriétés électrochromes, pour former la contre-électrode ;
- on applique sur le film de matière active électrochrome de l'un des substrats, une composition liquide destinée à former l'électrolyte polymère ;
- on applique le film de matière électrochrome de l'autre substrat sur la couche de ladite composition ;
- on soumet ladite composition à une réticulation ou une polymérisation.

Les matériaux constituants les différentes couches d'une lentille électrochrome selon l'invention sont tous des matériaux transparents dans le domaine visible du spectre lumineux.

Le matériau à conduction ionique formant l'électrolyte de la lentille électrochrome est constitué par un sel en solution dans un polymère solide solvatant. Il est obtenu à partir d'une composition liquide qui contient un précurseur liquide du polymère, un sel et éventuellement un diluant.

Le polymère solide est un polymère réticulé constitué par des chaînes polymères solvatantes reliées par des noeuds de réticulation. Les chaînes polymères solvatantes sont des chaînes homopolymère d'oxyde d'éthylène (POE), homopolymère d'oxyde de propylène (POP), et copolymère d'oxyde d'éthylène ou d'oxyde de propylène avec le 2,3-époxy-1-propanol.

Le précurseur liquide du polymère solvatant utilisé dans la composition liquide destinée à former l'électrolyte peut être choisi parmi les monomères liquides et les polymères à faible masse liquides qui sont des précurseurs pour les chaînes polymères solvatantes définies ci-dessus.

Les monomères sont choisis parmi l'oxyde d'éthylène, l'oxyde de propylène et le 2,3-époxy-1-propanol.

Les polymères liquides sont choisis parmi les POE, les POP, et les copolymères d'oxyde d'éthylène ou d'oxyde de propylène avec le 2,3-époxy-1-propanol qui ont une masse suffisamment faible pour être à l'état liquide et dans lesquels certaines unités récurrentes portent des groupes réactifs permettant une réticulation ultérieure, par exemple des groupes acrylate. On peut outre utiliser un mélange d'un polymère à faible masse moléculaire et d'un polymère à masse moléculaire élevée.

Le sel de l'électrolyte est de préférence un sel de lithium et d'un anion à charge électronique délocalisée. Comme exemple d'anions, on peut citer en particulier Br⁻, ClO₄⁻, AsF₆⁻, R_{F}SO₃⁻, (R_{F}SO₂)₂N⁻, (R_{F}SO₂)₃C⁻, R_{F} représentant un groupe perfluoroalkyle ou perfluoroaryle ayant de 1 à 4 atomes de carbone, et le diaminocyclohexane-*N,N*'-tétraacétate (DCTA⁻). Les composés ioniques préférés sont (CF₃SO₂) ₂N⁻Li⁺ et CF₃SO₃⁻Li⁺, plus particulièrement (CF₃SO₂) ₂N⁻Li⁺. La concentration en sel de la composition liquide destinée à former l'électrolyte est de préférence de 0,1 M à 2 M.

La composition liquide destinée à former l'électrolyte peut contenir un diluant choisi parmi les solvants organiques non volatils, à faible viscosité et à point d'ébullition élevé. On peut citer en particulier un diméthyléther de dipropylèneglycol (DPG). On peut en outre citer des monomères acrylates de faible viscosité et compatibles avec les polymères et les sels utilisés. Le diluant est destiné à rester dans l'électrolyte après réticulation.

L'application de la composition précurseur de la membrane d'électrolyte est effectuée avantageusement par dépôt à la tournette, (spin coating). L'application est effectuée de préférence sous atmosphère d'azote. Dans ce mode d'application, la composition liquide contient de préférence un diluant.

L'application de la composition précurseur de la membrane électrolyte peut en outre être effectuée à l'aide d'un applicateur du type racle, généralement dit "Doctor Blade".

Dans un mode de réalisation particulier, un film plastique, par exemple un film de poly(éthylène téréphtalate) peut être interposé entre le substrat transparent et la couche conductrice électronique qui lui est adjacente.

La polymérisation et la réticulation peuvent être effectuées par un technique appropriée, par exemple par irradiation par un rayonnement UV ou un faisceau d'électrons, par voie thermique, ou par irradiation UV combinée avec un traitement thermique.

La réticulation est effectuée en présence d'un photo initiateur approprié, par exemple Esacure KT046® commercialisé par la société Lamberti, ou les photo initiateurs commercialisés sous la dénomination Irgacure® par la société Ciba Specialty Chemicals. La teneur en photoinitiateur dans la composition liquide destinée à former l'électrolyte est de préférence de 0,1% à 3%. Le photo initiateur n'est pas nécessaire lorsque la réticulation est effectuée à l'aide d'un faisceau d'électrons.

Dans le premier mode de réalisation du procédé, il est préférable d'effectuer la photoréticulation sous atmosphère inerte, par exemple sous atmosphère d'azote, pour éviter l'inhibition de la polymérisation radicalaire par O₂. Dans le second mode de réalisation, la présence des substrats transparents empêche O₂ de diffuser dans la composition liquidé destinée à former l'électrolyte.

Le rayonnement UV peut être obtenu à l'aide d'une lampe UV du type lampe à mercure, ayant par exemple une énergie lumineuse de 1480 mJ sur tout son spectre d'émission.

L'électrode et la contre-électrode comprennent chacune un substrat transparent portant une matière active électrochrome appropriée.

Les substrats transparents sont constitués par tout matériau minéral, organique ou composite qui sont conducteurs électroniques, et ils sont choisis de préférence parmi les matériaux utilisés pour la réalisation de lentilles ophtalmiques. Les deux substrats transparents sont constitués de préférence par le même matériau.

Le verre minéral d'indice 1,5 est le matériau traditionnel de l'optique ophtalmique. Il est constitué de 60-70% d'oxyde de Silicium, et pour le reste de composants divers comme les oxydes de Calcium, Sodium et Bore. Le verre minéral d'indice 1,6 tend à devenir aujourd'hui le nouveau standard de l'optique ophtalmique. Son indice plus élevé est obtenu par adjonction dans le mélange d'une proportion significative d'oxyde de Titane.

Les matériaux "Sodocalciques" contiennent des proportions significatives de Sodium et de Calcium et ils constituent les matériaux traditionnels de l'optique ; leur indice de réfraction est peu élevé (n_{d} = 1,523) et leur dispersion chromatique est faible (constringence de l'ordre de 60). Les matériaux "Borosilicates" ont une teneur élevée en Bore et ce sont des matériaux plus récents utilisés pour la fabrication des verres à moyens indices ; ils présentent un indice de réfraction plus élevé que celui des matériaux sodocalciques (n_{d} = 1,600) .

D'autres matériaux minéraux ont un indice plus élevé. On peut citer notamment les verres au Titane (indice 1,7 et constringence 41), les verres au Lanthane (indice 1,8 et constringence 34), et les verres au Nobium (indice de réfraction 1,9 et constringence 30). Un indice de réfraction plus élevé permet de réaliser des verres plus minces.

En outre, les matériaux organiques utilisés en optique et en ophtalmie peuvent être utilisés comme substrat transparent pour une lentille électrochrome de l'invention. A titre d'exemples non limitatifs, on peut citer les polycarbonates ; les polyamides ; les polyimides ; les polysulfones ; les polyméthylméthacrylates ; les copolymères d'éthylène téréphtalate et de carbonate; les polyoléfines, notamment les polynorbornènes ; les polymères et copolymères de diéthylèneglycol bis(allylcarbonate); les polymères et copolymères (méth)acryliques, notamment les polymères et copolymères (méth)acryliques dérivés de bisphénol-A; polymères et les copolymères thio(méth)acryliques ; les polymères et copolymères uréthane et thiouréthane ; les polymères et copolymères époxy et les polymères et copolymères épisulfide. Ces matériaux présentent un indice de réfraction compris entre 1,50 et 1,80 avec un nombre d'Abe (ou constringence) compris entre 30 et 60. D'une façon avantageuse dans le cadre de l'invention, on choisit de préférence des substrats constitués par des matériaux organique tel que par exemple les polymères et copolymères de diéthylèneglycol bis(allylcarbonate) (plus connus sous la dénomination CR39 et commercialisés par la société PPG), les copolymères (méth)acryliques notamment les polymères et copolymères (méth)acryliques dérivés de bisphénol-A (tels que Orma® et Ormus® commercialisé par la société Essilor International), les polymères et copolymères uréthane et thiouréthane, les polymères et copolymères époxy et polymères et copolymères épisulfide, les polycarbonates, les polyamides et les polyméthylméthacrylates.

La matière active de l'électrode électrochrome est un matériau capable de passer de manière réversible d'un état coloré à un état non coloré sous l'effet d'une polarisation, lors de l'oxydation. Il peut être choisi notamment parmi WO₃, Li₄Ti₅O₁₂, et les polythiophènes substitués [par exemple le poly(3,4-éthylènedioxythiophène) désigné par PEDOT].

La matière active de la contre-électrode électrochrome est un matériau capable de passer de manière réversible d'un état coloré à un état non coloré sous l'effet d'une polarisation, lors d'une réduction. Il peut être choisi notamment parmi le Bleu de Prusse, LiFePO₄, NiOₓ, les polymères conducteurs du type polyaniline, polythiophène ou polypyrrole), et HₓIrO₂.

Le matériau formant les couches conductrices est un matériau semi conducteur. Il est choisi avantageusement parmi les dérives de l'oxyde d'étain, de l'oxyde d'indium, ou de l'oxyde de zinc. On peut citer en particulier l'oxyde d'étain dopé au fluor, l'oxyde d'indium dopé à l'étain (ITO), l'oxyde d'étain dopé à l'antimoine, l'oxyde de zinc dopé à l'aluminium. L'oxyde de titane et d'indium (ITO) est particulièrement préféré.

La présente invention est décrite plus en détails à l'aide des exemples qui suivent, auxquels elle n'est cependant pas limitée.

Les produits utilisés sont :
- Baytron M® : 3,4-éthylènedioxythiophène (EDOT) commercialisé par la société HC Starck ;
- Baytron C® : P-toluène sulfonate de Fe III, commercialisé par la société HC Starck ;
- E6311-A : polymère d'oxyde d'éthylène glycol diméthacrylate ayant une masse molaire Mw de 2500 commercialisé sous la dénomination EG-2500 par la société DKS (Japon)
- E6311-B : polymère d'oxyde d'éthylène ayant une masse molaire Mw de 5000 commercialisé sous la dénomination EG-5000 par la société DKS (Japon) ;
- E6311-C : glycérol-tri[poly(oxyéthylène(oxypropylène)] triacrylate ayant une masse molaire Mw de 8000, commercialisé sous la dénomination TA par la société DKS (Japon) ;
- POE 10⁶ : poly (oxyde d'éthylène) de masse 10⁶ commercialisé par la société Aldrich ;
- Esacure KTO46 : photo initiateur commercialisé par la société Sartomer Company, Inc., et constitué par un mélange d'oxyde de phosphine, d'α-hydroxycétone et d'un dérivé de benzophénone.
- DPG : Diméthyléther de diprolylèneglycol, solvant à point d'ébullition élevé, commercialisé par Clariant ;
- Torr Seal ® : joint en résine époxy commercialisé par la société Varian Inc.
- CR39 : plaquette du polycarbonate, commercialisé par la société Essilor International.

### Exemple 1

### Préparation d'une électrode

On a déposé ITO par pulvérisation cathodique sur une plaquette de CR-39. La couche de ITO obtenue a une résistance de couche de 50 Ω/□. Ensuite, sur la plaquette CR39 revêtue par un film de ITO, on a déposé par dépôt à la tournette (spin coating) une composition contenant 8 g de Baytron M et 33 g de Baytron C, puis on a appliqué un traitement thermique à 60°C pendant 1 heure pour réticuler le monomère thiophène. Le Baytron C en excès a été éliminé par lavage au n-butanol. L'électrode ainsi obtenue a une couche électrochrome de polythiophène substitué PEDOT et elle a été réduite par voie électrochimique pour obtenir le maximum de coloration.

### Exemple 2

### Préparation de la contre-électrode

On a déposé ITO par pulvérisation cathodique sur une plaquette de CR-39, avec une résistance de couche de 50 Ω/□. Ensuite, sur la plaquette CR39 revêtue par un film de ITO, on a déposé du Bleu de Prusse par voie électrochimique, jusqu'à une épaisseur conférant une capacité de 3 mC/cm².

### Exemple 3

### Préparation de compositions précurseurs de la membrane électrolyte

On a préparé diverses compositions de précurseur (CME) de la membrane électrolyte contenant l'un des polymères liquides E6311, LiTFSI, KTO46 et DPG par le procédé suivant :
- addition éventuelle de DPG en tant que diluant à E6311, et agitation pendant 5 min,
- addition de LiTFSI à E6311, et agitation pendant 20 min,
- addition de KTO46, et agitation du mélange pendant 20 min avant utilisation.

La teneur des constituants, exprimée en % en poids, est donnée dans le tableau suivant pour 4 compositions.

| | | E6311 | LiTFSI | KTO46 | DPG |
|---|---|---|---|---|---|
| CME1 | E6311-A | 65 | 0,6 | 2 | 32,4 |
| CME2 | E6311-B | 65 | 0,6 | 2 | 32,4 |
| CME3 | E6311-C | 96 | 1 | 3 | - |
| CME4 | E6311-B | 96 | 1 | 3 | - |

### Exemple 4

### Dépôt d'un film d'électrolyte sur un substrat

Sur une plaquette de CR-39, on a déposé par spin coating la composition CME1, avec une première étape de 30 secondes à 600 t/min, et une seconde étape de 120 s à 1500 t/min. Ensuite, la plaquette ainsi revêtue a été introduite dans une enceinte fermée purgée au préalable pendant 10 secondes par un courant d'azote pour éliminer l'oxygène, puis on a irradié à l'aide d'une lampe à mercure avec l'énergie suivante : UVA 780 mJ, UVB 60 mJ, UVC 60 mJ, UVV 580 mJ. La membrane obtenue après polymérisation est transparente et non collante, et elle a une épaisseur de 6 *µ*m. Le taux de transmission est de 92% dans le domaine du visible. La membrane polymérisée n'absorbe par conséquent qu'une très faible quantité de lumière visible.

Il est noté que le même résultat a été obtenu en utilisant la composition CME1 après un mois de stockage.

### Exemple 5

### Assemblage d'une cellule électrochrome, après réticulation de l'électrolyte

Une cellule électrochrome a été assemblée selon le mode opératoire suivant.

Sur une contre-électrode préparée selon le procédé de l'exemple 2, on a déposé par spin coating la composition CME1, avec une première étape de 30 secondes à 600 t/min, et une seconde étape de 120 s à 1500 t/min. Ensuite, la contre-électrode ainsi revêtue a été introduite dans une enceinte fermée purgée au préalable pendant 10 secondes par un courant d'azote pour éliminer l'oxygène, puis on a irradié à l'aide d'une lampe à mercure avec l'énergie suivante : UVA 780 mJ, UVB 60 mJ, UVC 60 mJ, UVV 580 mJ. La membrane obtenue après polymérisation est transparente et non collante, et elle a une épaisseur de 6 *µ*m.

Une électrode, obtenue selon le procédé de l'exemple 1, a été déposée sur la surface de la membrane polymère obtenue après irradiation aux UV, et l'ensemble ainsi formé a été placé sous un système de presse et comprimé pendant 1 heure à 70°C, puis à température ambiante durant 12 h.

La cellule électrochrome ainsi formée a été soumise alternativement à un potentiel de -1 V et de +1 V. On a constaté que la couleur passait du bleu clair au bleu foncé et réciproquement en moins de 10 secondes.

L'on a cependant constaté que le contact entre la membrane formant l'électrolyte et la couche adjacente de l'électrode n'est pas homogène.

Deux autres cellules électrochromes ont été assemblées selon le même procédé, mais en utilisant respectivement la composition CME2 et la composition CME4 au lieu de la composition CME1. Dans ces cellules, l'épaisseur de la membrane formant l'électrolyte est de 6 *µ*m pour la composition CME2 et de 25 *µ*m pour la composition CME4. Dans les deux cas, on a observé un changement couleur avec la même vitesse que celui observé pour le dispositif obtenu à partir de la composition CME1. Dans des deux cellules, on constate le même phénomène de faible homogénéité entre la couche d'électrolyte et la couche d.

### Exemple 6

Une cellule électrochrome a été élaborée selon le mode opératoire de l'exemple 1, avec les différences suivantes :
- La composition destinée à former l'électrolyte, désignée ici par CME5, a été préparée à partir de 150 g du polymère E6311-C, 32,62 g de LiTFSI et 0,15 g de KTO46, en mélangeant les constituants jusqu'à dissolution totale de LiTFSI et de KT046 dans le polymère.
- L'épaisseur de la couche de CME5 avant réticulation est de 30 *µ*m.
- La réticulation est effectuée par irradiation avec une lampe UV (0,2 A, λ=365 nm) pendant 5 secondes.
- après assemblage de la contre-électrode portant la membrane d'électrolyte polymère réticulé et de l'électrode, et mise sous pression, l'ensemble est scellé à l'aide d'un joint Torr Seal® pour former une lentille électrochrome.

La lentille ainsi obtenue est bleu foncé à +1 V et gris clair à -1 V. Le changement de couleur se fait en 3 sec.

### Exemple 7

Une lentille électrochrome a été élaboré selon le mode opératoire de l'exemple 5, à la différence que la composition CME5 a été appliquée sur l'électrode, et la contre-électrode a été appliquée sur la membrane polymère portée par l'électrode.

Les mêmes couleurs et vitesse de changement de couleur ont été observées.

### Exemple 8

On a reproduit le mode opératoire de l'exemple 5, mais en utilisant une composition CME6 préparée à partir de 197 g du polymère E6311-C, 49,3 g du polymère POE 10⁶, 53,56 g de LiTFSI et 0,24 g de KTO46.

On a constaté que la présence d'un polymère à poids moléculaire très élevé améliore notablement l'adhésion entre la membrane d'électrolyte et les couches électrochromes qui lui sont adjacentes.

Les changements de couleur en fonction de la polarisation de la lentille électrochrome obtenue sont analogues à ceux observés pour la lentille de l'exemple 7.

Un résultat analogue a été obtenu en appliquant la composition CME6 sur l'électrode, puis la contre-électrode sur l'électrode portant la membrane électrolyte.

### Exemple 9

### Réticulation du polymère de l'électrolyte après assemblage de la cellule électrochrome

Une cellule électrochrome a été assemblée selon le mode opératoire suivant.

Sur une contre-électrode préparée selon le procédé de l'exemple 2, on a déposé par spin coating la composition CME3, avec une première étape de 30 secondes à 600 t/min, et une seconde étape de 120 s à 1500 t/min. Ensuite, on a déposé à la surface de la couche de composition CME3, une électrode obtenue selon le procédé de l'exemple 1, en évitant les courts-circuits entre l'électrode et la contre-électrode.

Une irradiation de la couche CME3 par une lampe UV analogue à celle utilisée dans l'exemple 4 a été effectuée à travers l'électrode, pour photopolymériser ladite couche CME3. L'épaisseur de la membrane d'électrolyte après polymérisation est de 20 *µ*m.

Compte tenu du spectre d'absorption du photo initiateur, de la fenêtre de transmission de l'électrode de travail (CR39+ITO+PEDOT) et du spectre d'émission de la lampe de mercure utilisée, l'irradiation a pu être effectuée à travers l'électrode.

La cellule électrochrome ainsi formée a été soumise alternativement à un potentiel de -1 V et de +1 V. On a constaté que la couleur passait du bleu clair au bleu foncé et réciproquement en moins de 20 secondes.

Le contact entre la membrane formant l'électrolyte et les couches adjacentes est homogène.

### Exemple 10

### Comparaison d'un électrolyte préparé sans solvant et d'un électrolyte préparé avec solvant

### Electrolyte préparé sans solvant

On a préparé une composition d'électrolyte comme suit : on a mélangé 150 g du polymère à base de l'oxyde polyéthylène (E6311C) ayant un poids moléculaire de 8000 avec 32,6 g de sel LiTFSI, par agitation sur un système de rouleaux pendant 12 h. Une quantité de 1000 ppm de photoinitiateur (KT46) par rapport au poids de polymère a été ajouté, ensuite la composition a été appliquée sur un support de polypropylène (PP), par pression à 10 psi à chaud (t=80°C), puis réticulée à l'aide d'une lampe UV à 365 nm pendant une minute. Le film obtenu de 50 microns est sans porosité.

Ce film est utilisé comme film d'électrolyte dans une configuration
PET/ITO/PEDOT/électrolyte/bleu de Prusse/ITO/PET.

Le temps de coloration de cette fenêtre est inférieur à 5 secondes.

### Electrolyte préparé avec solvant (Contre exemple)

On a préparé une composition d'électrolyte comme suit : on a mélangé 49 g du polymère POE 10⁶ avec 122 ml d'acétonitrile, 30 ml d'acétone et 10 g de sel de LiTFSI, par agitation sur un système de rouleaux pendant 12 h. Ensuite on a ajouté une quantité de 1000 ppm de photoinitiateur (KT46) par rapport au poids de polymère, puis on a appliqué la composition sur un support de polypropylène (PP), on a évaporé le solvant à 40°C, puis on a réticulé à l'aide d'une lampe UV à 365 nm pendant une minute. Le film obtenu de 30 microns est poreux.

Ce film est utilisé comme film d'électrolyte dans une configuration
PET/ITO/PEDOT/électrolyte/bleu de Prusse/ITO/PET.

Le temps de coloration de cette fenêtre est supérieur à 10 secondes.

## Revendications

1. Procédé pour l'élaboration d'une lentille électrochrome comprenant une électrode et une contre-électrode séparées par un électrolyte solide polymère, l'électrode étant constituée par un substrat transparent portant un film conducteur électronique revêtu par un film d'une matière active de cathode ayant des propriétés électrochromes, la contre-électrode étant constituée par un substrat transparent portant un film conducteur électronique revêtu par un film d'une matière active d'anode ayant des propriétés électrochromes, l'électrolyte étant constitué par un matériau à conduction ionique comprenant un sel en solution dans un polymère solide solvatant,
ledit procédé comprenant les étapes consistant à préparer ladite électrode et ladite contre-électrode, et à les assembler par leurs faces portant le matériau électrochrome en intercalant entre lesdites faces une membrane d'électrolyte,
et il est caractérisé ce que la membrane d'électrolyte est intercalée sous forme d'une composition exempte de solvant liquide volatil et comprenant un précurseur du polymère et un sel, ladite composition étant liquide ou ayant une viscosité dynamique µ entre 100 et 10⁶ Pa.s., et en ce que la composition destinée à former l'électrolyte est une composition liquide, et ledit précurseur du polymère étant un polymère liquide choisi parmi les polymères d'oxyde d'éthylène, les polymères d'oxyde de propylène, et les copolymères d'oxydes d'éthylène ou d'oxyde de propylène avec le 2,3-époxy-1-propanol, qui ont une masse suffisamment faible pour être à l'état liquide et dans lesquels certaines unités récurrentes portent des groupes réactifs permettant une réticulation ultérieure, et ledit précurseur de polymère est soumis à une polymérisation ou à une réticulation après avoir été mis en contact avec au moins l'un des éléments parmi l'électrode et la contre-électrode.

2. Procédé selon la revendication 1, **caractérisé en ce que** la composition liquide contenant le précurseur du polymère est appliquée sur la face portant le matériau électrochrome de l'un des substrats transparents, puis soumise à une polymérisation ou une réticulation, et ensuite la face électrochrome de l'autre substrat est appliquée sur la membrane polymère obtenue après réticulation.

3. Procédé selon la revendication 2, **caractérisé en ce que** :
- on dépose, sur l'une des surfaces d'un 1^{er} substrat transparent, successivement un film de conducteur électronique et un film d'une matière active de cathode ayant des propriétés électrochromes, pour former l'électrode,
- on dépose, sur l'une des surfaces d'un 2^{ème} substrat transparent, successivement un film de conducteur électronique et un film d'une matière active d'anode ayant des propriétés électrochromes, pour former la contre-électrode ;
- on applique, sur le film de matière active électrochrome de l'un des substrats, une composition liquide destinée à former l'électrolyte polymère et on soumet ladite composition à une réticulation ou une polymérisation ;
- on applique la face électrochrome de l'autre substrat sur la membrane formée par réticulation ou polymérisation de la composition.

4. Procédé selon la revendication 1, **caractérisé en ce que** la composition liquide contenant le précurseur du polymère est injectée dans un espace délimité par la face libre du film de matériau électrochrome de chacun des substrats assemblés au préalable, puis soumise à une polymérisation ou une réticulation.

5. Procédé selon la revendication 4, **caractérisé en ce que** :
- on dépose, sur l'une des surfaces d'un 1^{er} substrat transparent, successivement un film de conducteur électronique et un film d'une matière active de cathode ayant des propriétés électrochromes, pour former l'électrode,
- on dépose, sur l'une des surfaces d'un 2^{ème} substrat transparent, successivement un film de conducteur électronique et un film d'une matière active d'anode ayant des propriétés électrochromes, pour former la contre-électrode ;
- on applique sur le film de matière active électrochrome de l'un des substrats, une composition liquide destinée à former l'électrolyte polymère ;
- on applique le film de matière électrochrome de l'autre substrat sur la couche de ladite composition ;
- on soumet ladite composition à une réticulation ou une polymérisation.

6. Procédé selon la revendication 1, **caractérisé en ce qu'**il comprend les étapes consistant à :
- appliquer sur un film accessoire, la composition exempte de solvant liquide volatil et comprenant un précurseur du polymère et un sel, ledit film accessoire étant constitué par un matériau choisi parmi le polypropylène, de polyéthylène, de polyéthylène téréphtalate ou de poly tétrafluoroéthyène.
- faire polymériser ou réticuler le précurseur du polymère ;
- appliquer le film de polymère réticulé ou polymérisé sur la face électrochrome de l'un des substrats, puis soumettre à une pression à chaud pour diminuer sa viscosité dynamique µ à une valeur entre 100 et 10⁶ Pa.s,
- retirer le film accessoire,
- appliquer la face électrochrome de l'autre substrat sur la face du film polymérisé ou réticulé libérée par le retrait du film accessoire.

7. Procédé selon la revendication 1, **caractérisé en ce que** la composition liquide contient en outre un diluant, choisi parmi les solvants organiques non volatils, à faible viscosité et à point d'ébullition élevé.

8. Procédé selon l'une quelconque des revendications précédentes, **caractérisé en ce que** lesdits groupes réactifs sont choisis parmi les groupes acrylate et les groupes méthacrylate.

9. Procédé selon l'une quelconque des revendications précédentes, **caractérisé en ce que** lesdits groupes réactifs sont choisis parmi les groupes triacrylate et les groupes diméthacrylate.

10. Procédé selon l'une quelconque des revendications précédentes, **caractérisé en ce que** le précurseur de polymère est choisi parmi le polymère d'oxyde d'éthylène glycol diméthacrylate et le glycérol-tri[poly(oxyéthylène)(oxypropylène)] triacrylate.

11. Procédé selon la revendication 8, **caractérisé en ce que** la composition liquide contient un mélange d'un polymère à faible masse moléculaire et d'un polymère à masse moléculaire élevée.

12. Procédé selon la revendication 1, **caractérisé en ce que** la composition liquide contient un sel de lithium et d'un anion choisi parmi Br⁻, ClO₄⁻, AsF₆⁻, R_{F}SO₃⁻, (R_{F}SO₂)₂N⁻, (R_{F}SO₂)₃C⁻, R_{F} représentant un groupe perfluoroalkyle ou perfluoroaryle ayant de 1 à 4 atomes de carbone, et le diaminocyclohexane-*N*,*N*'-tétraacétate (DCTA⁻).

13. Procédé selon la revendication 1, **caractérisé en ce que** la concentration en sel de la composition liquide est de 0,1 M à 2 M.

14. Procédé selon la revendication 1, **caractérisé en ce que** la composition liquide contenant le précurseur du polymère est appliquée sur la face portant le matériau électrochrome d'un substrat par dépôt à la tournette ou à l'aide d'une racle.

15. Procédé selon la revendication 1, **caractérisé en ce que** la polymérisation et la réticulation sont effectuées par irradiation par un rayonnement UV ou un faisceau d'élecrons, par voie thermique, ou par irradiation UV combinée avec un traitement thermique.

16. Procédé selon la revendication 13, **caractérisé en ce que** la réticulation sous irradiation par un rayonnement UV, en présence d'un photo initiateur.

17. Procédé selon la revendication 1, **caractérisé en ce que** la réticulation est effectuée sous irradiation sous atmosphère inerte.

18. Procédé selon la revendication 1, **caractérisé en ce que** la matière active de l'électrode électrochrome est choisi parmi WO₃, Li₄Ti₅O₁₂, et les polythiophènes substitués.

19. Procédé selon la revendication 1, **caractérisé en ce que** la matière active de la contre-électrode est choisie parmi le Bleu de Prusse, LiFePO₄, NiOₓ, les polymères conducteurs du type polyaniline, polythiophène ou polypyrrole, et HₓIrO₂.

20. Procédé selon la revendication 1, **caractérisé en ce que** le matériau choisi pour les films conducteurs électronique est choisi parmi les dérivés de l'oxyde d'étain, de l'oxyde d'indium, ou de l'oxyde de zinc.

21. Procédé selon la revendication 20, **caractérisé en ce que** les dérivés de l'oxyde d'étain sont choisis parmi l'oxyde d'étain dopé au fluor, l'oxyde d'indium dopé à l'étain (ITO), l'oxyde d'étain dopé à l'antimoine, l'oxyde de zinc dopé à l'aluminium.

22. Procédé selon la revendication 1, **caractérisé en ce que** les substrats transparents sont constitués par un matériau choisi parmi les verres minéraux et les verres organiques utilisés en ophtalmie.

23. Procédé selon la revendication 22, **caractérisé en ce que** le substrat est un verre minéral choisi parmi :
- les verres sodocalciques ayant un indice de réfraction n_{d} = 1,523 et une constringence de l'ordre de 60 ;
- les verres borosilicates qui ont un indice de réfraction n_{d} = 1,600 ;
- les verres au Titane qui ont un indice nd = 1,7 et une constringence de 41 ;
- les verres au Lanthane qui ont un indice n_{d} = 1,8 et une constringence de 34, et
- les verres au Nobium qui ont un indice n_{d} = 1,9 et une constringence de 30.

24. Procédé selon la revendication 22, **caractérisé en ce que** le substrat est un matériau organique choisi parmi les polycarbonates ; les polyamides ; les polyimides ; les polysulfones ; les polyméthylméthacrylates ; les copolymères d'éthylènetérephtalate et de carbonate; les polyoléfines, notamment les polynorbornènes ; les polymères et copolymères de diéthylèneglycol bis(allylcarbonate); les polymères et copolymères (méth)acryliques, notamment les polymères et copolymères (méth)acryliques dérivés de bisphenol-A; polymères et les copolymères thio(méth)acryliques ; les polymères et copolymères uréthane et thiouréthane ; les polymères et copolymères époxy et les polymères et copolymères épisulfide.

25. Lentille électrochrome obtenue par un procédé selon l'une des revendications 1 à 24, comprenant une électrode et une contre-électrode séparée par une membrane d'électrolyte, l'électrode étant constituée par un substrat transparent portant un film conducteur électronique revêtu par un film d'une matière active de cathode ayant des propriétés électrochromes, la contre-électrode étant constituée par un substrat transparent portant un film conducteur électronique revêtu par un film d'une matière active d'anode ayant des propriétés électrochromes, **caractérisée en ce que** l'électrolyte est constitué par un matériau à conduction ionique comprenant un sel en solution dans un polymère solide solvatant réticulé constitué par des chaînes polymères solvatantes reliées par des noeuds de réticulation, lesdites chaînes polymère étant du type homopolymère d'oxyde d'éthylène (POE), homopolymère d'oxyde de propylène (POP), copolymère d'oxyde d'éthylène ou d'oxyde de propylène avec le 2,3-époxy-1-propanol.

26. Lentille selon la revendication 25, **caractérisé en ce que** le sel est un sel de lithium d'un anion choisi parmi Br⁻, ClO₄⁻, AsF₆⁻, R_{F}SO₃⁻, (R_{F}SO₂)₂N⁻, (R_{F}SO₂)₃C⁻, R_{F} représentant un groupe perfluoroalkyle ou perfluoroaryle ayant de 1 à 4 atomes de carbone, et le diaminocyclohexane-*N*,*N*'-tétraacétate (DCTA⁻).

## Patentansprüche

1. Verfahren zur Herstellung einer elektrochromen Linse, umfassend eine Elektrode und eine Gegenelektrode, die durch einen polymeren Festelektrolyt getrennt sind, wobei der Elektrolyt aus einem transparenten Substrat besteht, das einen elektronisch leitenden Film trägt, der mit einem Film aus einem aktiven Kathodenmaterial beschichtet ist, das elektrochrome Eigenschaften aufweist, wobei die Gegenelektrode aus einem transparenten Substrat besteht, das einen elektronisch leitenden Film trägt, der mit einem Film aus einem aktiven Anodenmaterial beschichtet ist, das elektrochrome Eigenschaften aufweist, wobei der Elektrolyt aus einem Material mit ionischer Leitung besteht, umfassend ein Salz in Lösung in einem solvatisierenden festen Polymer,
wobei das Verfahren die Schritte umfasst, bestehend aus dem Herstellen der Elektrode und der Gegenelektrode, und ihrer Montage durch ihre Seiten, die das elektrochrome Material tragen, interkalierend zwischen den Seiten einer Elektrolytmembran,
und **dadurch gekennzeichnet, dass** die Elektrolytmembran in Form einer Zusammensetzung frei von flüchtigem flüssigem Lösemittel interkaliert ist und umfassend einen Vorläufer des Polymers und ein Salz, wobei die Zusammensetzung flüssig ist oder eine dynamische Viskosität µ zwischen 100 und 10⁶ Pa.s. aufweist, und wobei der Vorläufer des Polymers ein flüssiges Polymer ist, ausgewählt aus Ethylenoxidpolymeren, Propylenoxidpolymeren und Ethylenoxid- oder Propylenoxidcopolymeren mit 2,3-Epoxy-1-propanol, die eine ausreichend geringe Masse aufweisen, um im flüssigen Zustand zu sein, und wobei bestimmte wiederkehrende Einheiten reaktive Gruppen tragen, die eine spätere Vernetzung ermöglichen, und der Polymervorläufer einer Polymerisierung oder einer Vernetzung unterzogen wird, nachdem er mit mindestens einem der Elemente aus der Elektrode und der Gegenelektrode in Kontakt gebracht wurde.

2. Verfahren nach Anspruch 1, **dadurch gekennzeichnet, dass** die flüssige Zusammensetzung, die den Vorläufer des Polymers enthält, auf die Seite aufgebracht wird, die das elektrochrome Material eines der transparenten Substrate trägt, dann einer Polymerisierung oder einer Vernetzung unterzogen wird und schließlich die elektrochrome Seite des anderen Substrats auf die polymere Membran, erhalten nach der Vernetzung, aufgebracht wird.

3. Verfahren nach Anspruch 2, **dadurch gekennzeichnet, dass**
- auf einer der Flächen eines ersten transparenten Substrats aufeinanderfolgend ein elektronisch leitender Film und ein Film eines aktiven Kathodenmaterials, der elektrochrome Eigenschaften aufweist, abgelegt wird, um die Elektrode zu bilden,
- auf einer der Flächen eines zweiten transparenten Substrats, aufeinanderfolgend ein elektronisch leitender Film und ein Film eines aktiven Anodenmaterials, das elektrochrome Eigenschaften aufweist, abgelegt wird, um die Gegenelektrode zu bilden,
- auf den Film aus elektrochromem aktivem Material eines der Substrate eine flüssige Zusammensetzung aufgebracht wird, die ausgelegt ist, um den polymeren Elektrolyt zu bilden, und die Zusammensetzung einer Vernetzung oder einer Polymerisierung unterzogen wird;
- die elektrochrome Seite des anderen Substrats auf die Membran aufgebracht wird, die durch Vernetzung oder Polymerisierung der Zusammensetzung gebildet ist.

4. Verfahren nach Anspruch 1, **dadurch gekennzeichnet, dass** die flüssige Zusammensetzung, die den Vorläufer des Polymers enthält, in einen Raum injiziert wird, der von der freien Seite des Films des elektrochromen Materials jedes der Substrate, die im Voraus montiert wurden, begrenzt ist, und dann einer Polymerisierung oder einer Vernetzung unterzogen wird

5. Verfahren nach Anspruch 4, **dadurch gekennzeichnet, dass**
- auf einer der Flächen des ersten transparenten Substrats aufeinanderfolgend ein elektronisch leitender Film und ein Film eines aktiven Kathodenmaterials, das elektrochrome Eigenschaften aufweist, abgelegt wird, um die Elektrode zu bilden.
- auf einer der Flächen eines zweiten transparenten Substrats aufeinanderfolgend ein elektronisch leitender Film und ein Film eines aktiven Anodenmaterials, das elektrochrome Eigenschaften aufweist, abgelegt wird, um die Gegenelektrode zu bilden.
- auf den Film aus elektrochromem aktivem Material eines der Substrate eine flüssige Zusammensetzung aufgebracht wird, die ausgelegt ist, um den polymeren Elektrolyt zu bilden;
- der Film aus elektrochromem Material des anderen Substrats auf die Schicht der Zusammensetzung aufgebracht wird,
- die Zusammensetzung einer Vernetzung oder einer Polymerisierung unterzogen wird.

6. Verfahren nach Anspruch 1, **dadurch gekennzeichnet, dass** es die folgenden Schritte, umfasst die darin bestehen:
- auf einen zusätzlichen Film die Zusammensetzung frei von flüchtigem flüssigem Lösemittel und umfassend einen Vorläufer des Polymers und ein Salz aufzubringen, wobei der zusätzliche Film aus einem Material besteht, ausgewählt aus Polypropylen, Polyethylen, Polyethylenterephtalat oder Polytetrafluoroethylen,
- Polymerisieren oder Vernetzen des Vorläufers des Polymers;
- Aufbringen des Films aus vernetztem oder polymerisiertem Polymer auf die elektrochrome Seite des eines der Substrate, dann Aussetzen an einen Heißdruck, um seine dynamische Viskosität µ auf einem Wert zwischen 100 und 10⁶ Pa.s zu senken,
- Entfernen des zusätzlichen Films,
- Aufbringen der elektrochromen Seite des anderen Substrats auf die Seite des polymerisierten oder vernetzten Films, der durch die Entfernung des zusätzlichen Films freigesetzt ist.

7. Verfahren nach Anspruch 1, **dadurch gekennzeichnet, dass** die flüssige Zusammensetzung außerdem ein Verdünnungsmittel umfasst, ausgewählt aus den nicht flüchtigen organischen Lösemitteln mit geringer Viskosität und erhöhtem Siedepunkt.

8. Verfahren nach einem der vorhergehenden Ansprüche, **dadurch gekennzeichnet, dass** die reaktiven Gruppen ausgewählt sind aus den Acrylatgruppen und den Methacrylatgruppen.

9. Verfahren nach einem der vorhergehenden Ansprüche, **dadurch gekennzeichnet, dass** die reaktiven Gruppen ausgewählt sind aus den Triacrylat- und den Dimethacrylatgruppen.

10. Verfahren nach einem der vorhergehenden Ansprüche, **dadurch gekennzeichnet, dass** der Polymervorläufer ausgewählt ist aus Ethylenglycoldimethacrylat-Oxidpolymer und Glycerol-tri[poly(oxyethylen)(oxypropylene)]triacrylat.

11. Verfahren nach Anspruch 8, **dadurch gekennzeichnet, dass** die flüssige Zusammensetzung ein Gemisch eines Polymers mit geringer Molekularmasse und eines Polymers mit erhöhter Molekularmasse enthält.

12. Verfahren nach Anspruch 1, **dadurch gekennzeichnet, dass** die flüssige Zusammensetzung ein Lithiumsalz und eines Anions enthält, ausgewählt aus Br⁻, ClO₄⁻, AsF₆⁻, R_{F}SO₃⁻, (R_{F}SO₂)₂N⁻, (R_{F}SO₂)₃C⁻, wobei R_{F} eine Perfluoroalkyl- oder Perfluoroarylgruppe, die von 1 bis 4 Kohlenstoffatome aufweist, und Diaminocyclohexan-N, N' -tetraacetat (DCTA⁻) darstellt.

13. Verfahren nach Anspruch 1, **dadurch gekennzeichnet, dass** die Salzkonzentration der flüssigen Zusammensetzung von 0,1 M bis 2 M ist.

14. Verfahren nach Anspruch 1, **dadurch gekennzeichnet, dass** die flüssige Zusammensetzung, die den Vorläufer des Polymers enthält, auf die Seite, die das elektrochrome Material eines Substrats umfasst, durch Rotationsbeschichtung oder mit Hilfe eines Rakelmessers abgelegt wird.

15. Verfahren nach Anspruch 1, **dadurch gekennzeichnet, dass** die Polymerisierung und die Vernetzung durch Bestrahlung mit einer UV-Strahlung oder einem Elektronenstrahl, durch thermische Behandlung oder durch UV-Strahlung, kombiniert mit einer thermischen Behandlung, durchgeführt werden.

16. Verfahren nach Anspruch 13, **gekennzeichnet durch** die Vernetzung durch Bestrahlung mit einer UV-Strahlung in Anwesenheit eines Fotoinitiators.

17. Verfahren nach Anspruch 1, **dadurch gekennzeichnet, dass** die Vernetzung unter Bestrahlung unter inerter Atmosphäre durchgeführt wird.

18. Verfahren nach Anspruch 1, **dadurch gekennzeichnet, dass** das aktive Material der elektrochromen Elektrode ausgewählt ist aus WO₃, Li₄Ti₅O₁₂ und substituierten Polythiophenen.

19. Verfahren nach Anspruch 1, **dadurch gekennzeichnet, dass** das aktive Material der Gegenelektrode ausgewählt ist aus Preußischblau, LiFePO₄, NiOₓ, leitenden Polymeren vom Typ Polyanilin, Polythiophen oder Polypyrrol, und HxIrO₂.

20. Verfahren nach Anspruch 1, **dadurch gekennzeichnet, dass** das Material, ausgewählt für die elektronisch leitenden Filme, ausgewählt ist aus den Derivaten von Zinnoxid, Indiumoxid oder Zinkoxid.

21. Verfahren nach Anspruch 20, **dadurch gekennzeichnet, dass** die Derivate des Zinnoxids ausgewählt sind aus Zinnoxid dotiert mit Fluor, Indiumoxid dotiert mit Zinn (ITO), Zinnoxid dotiert mit Antimon, Zinkoxid dotiert mit Aluminium.

22. Verfahren nach Anspruch 1, **dadurch gekennzeichnet, dass** die transparenten Substrate aus einem Material bestehen, ausgewählt aus Mineralgläsern und organischen Gläsern, die in der Ophthalmie verwendet werden.

23. Verfahren nach Anspruch 22, **dadurch gekennzeichnet, dass** das Substrat ein Mineralglas ist, ausgewählt aus:
- Natron-Kalk-Gläsern mit einem Brechungsindex n_{d} = 1,523 und einer Abbe-Zahl im Bereich von 60;
- Borsilikatgläsern, die einen Brechungsindex n_{d} = 1,600 aufweisen;
- Titangläsern, die einen Index n_{d} = 1,7 und eine Abbe-Zahl von 41 aufweisen;
- Lanthangläsern, die einen Index n_{d} = 1,8 und eine Abbe-Zahl von 34 aufweisen; und
- Niobgläsern, die einen Index n_{d} = 1,9 und eine Abbe-Zahl von 30 aufweisen.

24. Verfahren nach Anspruch 22, **dadurch gekennzeichnet, dass** das Substrat ein organisches Material ist, ausgewählt aus Polycarbonaten; Polyamiden; Polyimiden; Polysulfonen; Polymethylmethacrylaten; Ethylenterephtalat- und Carbonatcopolymeren; Polyolefinen, insbesondere Polynorbornenen; Diethylenglycolbis(allylcarbonat)polymeren und -copolymeren; (Meth)acrylpolymeren und -copolymeren, insbesondere (Meth)acrylpolymeren und -copolymeren, abgeleitet von Bisphenol-A; Thio(meth)acrylpolymeren und -copolymeren; Urethan- und Thiourethanpolymeren und - copolymeren; Epoxypolymeren und -copolymeren und Episulfidpolymeren und - copolymeren.

25. Elektrochrome Linse, die durch ein Verfahren nach einem der Ansprüche 1 bis 24 erhalten wird, umfassend eine Elektrode und eine Gegenelektrode, getrennt durch eine Elektrolytmembran, wobei die Elektrode aus einem transparenten Substrat besteht, das einen elektronisch leitenden Film trägt, der mit einem Film eines aktiven Kathodenmaterials beschichtet ist, das elektrochrome Eigenschaften aufweist, wobei die Gegenelektrode aus einem transparenten Substrat besteht, das einen elektronisch leitenden Film trägt, der mit einem Film aus aktivem Anodenmaterial beschichtet ist, das elektrochrome Eigenschaften aufweist, **dadurch gekennzeichnet, dass** der Elektrolyt aus einem Material mit ionischer Leitung besteht, umfassend ein Salz in Lösung in einem vernetzten solvatisierenden festen Polymer, das aus solvatisierenden Polymerketten besteht, die durch Vernetzungsknoten verbunden sind, wobei die Polymerketten vom Typ Ethylenoxidhomopolymer (POE), Propylenoxidhomopolymer (POP), Ethylenoxidcopolymer oder Propylenoxid mit 2,3-Epoxy-l-propanol sind.

26. Linse nach Anspruch 25, **dadurch gekennzeichnet, dass** das Salz ein Lithiumsalz eines Anions ausgewählt aus Br⁻, ClO₄⁻, ASF₆⁻, RFSO₃⁻, (RFSO₂)₂N⁻, (R_{F}SO₂)₃C⁻ ist, wobei R_{F} eine Perfluoroalkyl- oder Perfluoroarylgruppe, die von 1 bis 4 Kohlenstoffatome aufweist, und Diaminocyclohexan-N, N'-tetraacetat (DCTA⁻) darstellt.

## Claims

1. Method for preparing an electrochromic lens comprising an electrode and counter-electrode separated by a solid polymer electrolyte, the electrode being formed of a transparent substrate carrying an electron conducting film coated with a film of an active cathode material having electrochromic properties, the counter-electrode being formed of a transparent substrate carrying an electron conducting film coated with a film of an active anode material having electrochromic properties, the electrolyte being formed of an ion conducting material comprising a salt in solution in a solvating solid polymer,
said method comprising the steps of preparing said electrode and said counter-electrode, and assembly thereof via their surfaces carrying the electrochromic material interposing an electrolyte membrane between said surfaces,
and it is **characterized in that** the electrolyte membrane is interposed in the form of a composition free of volatile liquid solvent and comprising a precursor of the polymer and a salt, said composition being liquid or having a dynamic viscosity µ of between 100 and 10⁶ Pa.s., and said precursor of the polymer being a liquid polymer selected from among polymers of ethylene oxide, polymers of propylene oxide, and copolymers of ethylene oxides or propylene oxide with 2,3-epoxy-1-propanol, of sufficiently low mass to be in the liquid state and in which some recurrent units carry reactive groups allowing subsequent crosslinking, and said polymer precursor is subjected to polymerisation or crosslinking after being placed in contact with at least one of the elements from among the electrode and counter-electrode.

2. The method according to claim 1, **characterized in that** the liquid composition containing the precursor of the polymer is applied to the surface carrying the electrochromic material of one of the transparent substrates, then subjected to polymerisation or crosslinking, after which the electrochromic surface of the other substrate is applied to the polymer membrane obtained after crosslinking.

3. The method according to claim 2, **characterized in that**:
- on one of the surfaces of a 1^{st} transparent substrate, an electron conducting film and a film of an active cathode material having electrochromic properties are successively deposited to form the electrode;
- on one of the surfaces of a 2^{nd} transparent substrate, an electron conducting film and a film of an active anode material having electrochromic properties are successively deposited to form the counter-electrode;
- on the film of active electrochromic material of one of the substrates, a liquid composition is applied intended to form the polymer electrolyte and said composition is subjected to crosslinking or polymerisation;
- the electrochromic surface of the other substrate is applied to the membrane formed by crosslinking or polymerising the composition.

4. The method according to claim 1, **characterized in that** the liquid composition containing the polymer precursor is injected into a space delimited by the free side of the film of electrochromic material of each of the previously assembled substrates, then subjected to polymerisation or crosslinking.

5. The method according to claim 4, **characterized in that**:
- on one of the surfaces of a 1^{st} transparent substrate, an electron conducting film and a film of an active cathode material having electrochromic properties are successively deposited to form the electrode;
- on one of the surfaces of a 2^{nd} transparent substrate, an electron conducting film and a film of active anode material having electrochromic properties are successively deposited to form the counter-electrode;
- on the film of active electrochromic material of one of the substrates, a liquid composition is applied intended to form the polymer electrolyte;
- the film of electrochromic material of the other substrate is applied onto the layer of said composition;
- said composition is subjected to crosslinking or polymerisation.

6. The method according to claim 1, **characterized in that** it comprises the steps of:
- applying, to an accessory film, the composition free of volatile liquid solvent and comprising a precursor of the polymer and a salt, said accessory film being formed of a material selected from among polypropylene, polyethylene, polyethylene terephthalate or polytetrafluoroethylene;
- polymerising or crosslinking the precursor of the polymer;
- applying the film of crosslinked or polymerised polymer onto the electrochromic side of one of the substrates, followed by subjection to hot pressure to reduce the dynamic viscosity µ thereof to a value of between 100 and 10⁶ Pa.s;
- removing the accessory film;
- applying the electrochromic side of the other substrate onto the surface of the polymerised or crosslinked film freed through removal of the accessory film.

7. The method according to claim 1, **characterized in that** the liquid composition also contains a diluent selected from among non-volatile organic solvents having a low viscosity and a high boiling point.

8. The method according to any of the preceding claims, **characterized in that** said reactive groups are selected from among acrylate groups and methacrylate groups.

9. The method according to any of the preceding claims, **characterized in that** said reactive groups are selected from among triacrylate groups and dimethacrylate groups.

10. The method according to any of the preceding claims, **characterized in that** the polymer precursor is selected from among the polymer of ethylene oxide glycol dimethacrylate and glycerol-tri[poly(oxyethylene) (oxypropylene)] triacrylate.

11. The method according to claim 8, **characterized in that** the liquid composition contains a mixture of a low molecular weight polymer and a high molecular weight polymer.

12. The method according to claim 1, **characterized in that** the liquid composition contains a salt of lithium and of an anion selected from among Br⁻, ClO₄⁻, AsF₆⁻, R_{F}SO₃⁻ (R_{F}SO₂)₂N⁻, (R_{F}SO₂)₃C⁻, R_{F} representing a perfluoroalkyl or perfluoroaryl group having 1 to 4 carbon atoms, and diaminocyclohexane-*N,N*'-tetraacetate (DCTA⁻).

13. The method according to claim 1, **characterized in that** the salt concentration of the liquid composition is 0.1 M to 2 M.

14. The method according to claim 1, **characterized in that** the liquid composition containing the polymer precursor is applied to the side of a substrate carrying the electrochromic material, via spin coating or using a doctor blade.

15. The method according to claim 1, **characterized in that** polymerisation and crosslinking are conducted by irradiation via UV radiation or beam of electrons, via heat treatment or via UV radiation combined with heat treatment.

16. The method according to claim 13, **characterized in that** crosslinking under irradiation via UV radiation takes place in the presence of a photoinitiator.

17. The method according to claim 1, **characterized in that** crosslinking is conducted under irradiation in an inert atmosphere.

18. The method according to claim 1, **characterized in that** the active material of the electrochromic electrode is selected from among WO₃, Lᵢ₄Ti₅O₁₂, and substituted polythiophenes.

19. The method according to claim 1, **characterized in that** the active material of the counter-electrode is selected from among Prussian Blue, LiFePO₄, NiOₓ, conducting polymers of polyaniline, polythiophene or polypyrrole type, and HₓIrO₂.

20. The method according to claim 1, **characterized in that** the material selected for the electron conducting films is selected from among derivatives of tin oxide, of indium oxide or of zinc oxide.

21. The method according to claim 20, **characterized in that** the derivatives of tin oxide are selected from among fluorine-doped tin oxide, tin-doped indium oxide (ITO), antimony-doped tin oxide, aluminium-doped zinc oxide.

22. The method according to claim 1, **characterized in that** the transparent substrates are formed of a material selected from among mineral glass and organic glass used in ophthalmic optics.

23. The method according to claim 22, **characterized in that** the substrate is in mineral glass selected from among:
- soda-lime glass having a refractive index n_{d} = 1.523 and Abbe number of approximately 60;
- borosilicate glass having a refractive index n_{d} = 1.600;
- titanium glass having an index n_{d} = 1.7 and Abbe number of 41;
- lanthanum glass having an index n_{d} = 1.8 and Abbe number of 34; and
- niobium glass having an index n_{d} = 1.9 and Abbe number of 30.

24. The method according to claim 22, **characterized in that** the substrate is an organic material selected from among polycarbonates; polyamides; polyimides, polysulfones; polymethylmethacrylates; copolymers of ethylene terephthalate and carbonate; polyolefins, in particular polynorbornenes; polymers and copolymers of diethylene glycol bis(allylcarbonate); methacrylic polymers and copolymers, in particular methacrylic polymers and copolymers derived from bisphenol-A; thio(meth)acrylic polymers and copolymers; urethane and thiourethane polymers and copolymers; epoxy polymers and copolymers, and episulfide polymers and copolymers.

25. Electrochromic lens obtained with a method according to one of claims 1 to 24, comprising an electrode and a counter-electrode separated by an electrolyte membrane, the electrode being formed of a transparent substrate carrying an electron conducting film coated with a film of an active cathode material having electrochromic properties, the counter-electrode being formed of a transparent substrate carrying an electron conducting film coated with a film of an active anode material having electrochromic properties, **characterized in that** the electrolyte is formed of an ion conducting material comprising a salt in solution in a solid crosslinked solvating polymer composed of solvating polymer chains linked by crosslink points, said polymer chains being of the type homopolymer of ethylene oxide (EOP), homopolymer of propylene oxide (POP), copolymer of ethylene oxide or propylene oxide with 2,3-epoxy-1-propanol.

26. The lens according to claim 25, **characterized in that** the salt is a salt of lithium and of an anion selected from among Br⁻, ClO₄⁻, AsF₆⁻, R_{F}SO₃⁻ (R_{F}SO₂)₂N⁻, (R_{F}SO₂)₃C⁻, R_{F} representing a perfluoroalkyl or perfluoroaryl group having 1 to 4 carbon atoms, and diaminocyclohexane-*N,N*'-tetraacetate (DCTA⁻).
